# EUROPEAN PATENT SPECIFICATION

(11) **EP 0 652 134 B1**
(45) Date of publication and mention of the grant of the patent: **04.03.1998**
(21) Application number: 94117690.1
(22) Date of filing: 09.11.1994
(51) Int. Cl.: B60Q 1/115

(54) **Electronic system for automatically adjusting the inclination of the headlights of a vehicle, in particular a motor vehicle**
Elektronische Einrichtung zur automatischen Einstellung der Neigung von Kraftfahrzeugscheinwerfern
Dispositif électronique pour ajuster automatiquement l'inclinaison des phares d'un véhicule automobile

(30) Priority: 10.11.1993 IT TO930849
(43) Date of publication of application: 10.05.1995
(73) Proprietor: MAGNETI MARELLI S.p.A., 20145 Milano (IT)
(72) Inventor: Marengo, Franco, 10154 Torino (IT); Malvicino, Carlo Andrea, 10146 Torino (IT)
(74) Representative: Plebani, Rinaldo

(56) References cited:
- EP-A- 0 355 539
- EP-A- 0 470 395
- EP-A- 0 470 401
- DE-A- 3 827 149
- GB-A- 1 486 213
- ATZ AUTOMOBILTECHNISCHE ZEITSCHRIFT, vol.95, no.9, September 1993, STUTTGART pages 466 - 469, XP000390506 TOOP 'Dynamische Leuchtweitregelung'
- PATENT ABSTRACTS OF JAPAN vol. 12, no. 229 (M-714) 29 June 1988 & JP-A-63 025 149 (OMRON TATEISI ELECTRONICS CO)

## Description

The present invention relates to an electronic system for automatically adjusting the inclination of the headlights of a vehicle, in particular a motor vehicle.

It is known that rapid variation in the speed of the vehicle causes pitching of the vehicle itself with consequent variation in the angle of incidence which the light rays generated by the vehicle headlights form with the horizontal plane.

In particular, sudden deceleration of the vehicle causes an increase in this angle of incidence (and hence a reduction in the illuminated area) and sudden acceleration of the vehicle causes a decrease in the angle of incidence (and an increase in the illuminated area with consequent dazzling of oncoming vehicles).

In order to compensate for this pitching effect, electronic systems have been provided, which measure the angle of momentary pitching of the vehicle and they use the value of the angle thus recorded in order to modify automatically the inclination of the optical axis of the vehicle headlights and keep the range of the illuminated area substantially constant. In particular, these systems are designed to keep the maximum distance of the illuminated area from the vehicle constant.

Recording of the pitching angle is performed in the known systems by means of differential measurement of the distance from the ground of the front and rear ends of the vehicle. These measurements are generally performed by means of ultrasound sensors, potentiometric sensors or pneumatic sensors.

The known systems involve considerable costs, use a large number of components and installation thereof is therefore long and complex and expensive.

A known system uses a differentiated velocity signal to switch between a fast mode and a slow mode of adjustment.

The aim of the present invention is to provide an electronic system for automatically adjusting the inclination of the headlights of a vehicle, which overcomes the drawbacks of the known systems.

The above aim is achieved by the present invention in that it relates to an electronic system for automatically adjusting the inclination of the headlights of a vehicle, as claimed in claim 1.

The invention will now be illustrated with particular reference to the accompanying figures which show a preferred non-limiting embodiment thereof, in which:
Figure 1 is a simplified block diagram of an electronic system for automatic adjustment of the inclination of the headlights of a vehicle, in particular a motor vehicle, provided in accordance with the present invention; and
Figure 2 is a schematic illustration of a motor vehicle using the electronic system according to the present invention.

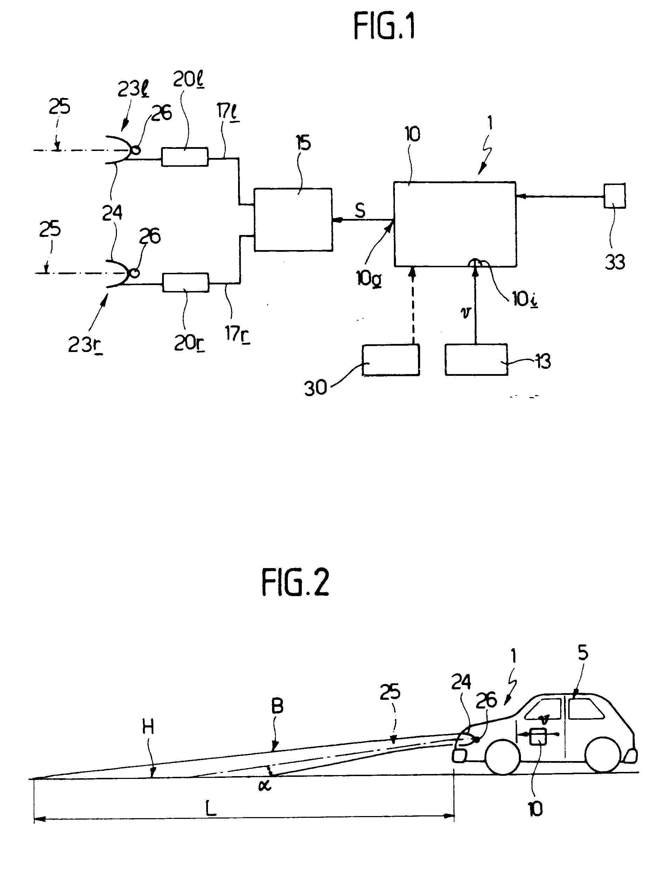

With reference to Figures 1 and 2, 1 denotes in its entirety a system for automatically adjusting the inclination of the headlights of a vehicle, in particular a motor vehicle 5 (shown schematically in Figure 2).

With particular reference to Figure 1, the system 1 comprises an electronic microprocessor control unit 10 which has a first input 10i connected to a velocity sensor 13 (for example a tachometric sensor) designed to measure the momentary longitudinal velocity V of the vehicle 5.

The control unit 10 is provided with an output 10o connected to the input of an electronic power circuit 15 which has two outputs connected via respective electric lines 17l, 17r to respective linear actuators 20l, 20r suitably formed by stepper motors coupled respectively to a left-hand headlight 23l and a right-hand headlight 23r with adjustable inclination (of the known type).

In particular, each adjustable-inclination headlight 23l, 23r comprises a dish reflector 24 which houses a light source (not shown) and has an optical axis 25.

Each reflector 24 is moreover angularly movable about a horizontal hinge 26 as a result of the thrusting action of the respective linear actuator 20l, 20r.

The headlights 23l, 23r produce beams B of light rays which strike the horizontal surface H (Figure 2) at a maximum distance L from the vehicle 5.

The optical axis 25 of the headlights 23l, 23r form moreover an angle of incidence α with the horizontal plane (Figure 2).

The control unit 10 is provided with a derivation circuit (not shown) which provides the derivative over time of the signal generated by the sensor 13.

During operation, the sensor 13 generates an electrical signal V, the value of which is proportional to the longitudinal momentary velocity of the vehicle; this electrical signal V is supplied to the control unit 10 which calculates the derivative over time d(V)/d(t), obtaining the momentary value of longitudinal acceleration of the vehicle 5. The control unit 10, on the basis of the acceleration value, formulates a correction signal S which, after being amplified by the power circuit 15, drives the actuators 20l, 20r. In particular, in the case of a positive longitudinal acceleration, the actuators 20l, 20r are operated so as to incline the axis 25 downwards and increase the angle of incidence α, while in the case of a deceleration, the actuators 20l, 20r are operated so as to reduce the angle of incidence α.

In this way the variations in the inclination of the beam B due to pitching of the vehicle are automatically compensated for and the maximum distance L of the illuminated area is kept substantially constant.

The advantages of the present invention are obvious since the system 1 uses a single sensor (the velocity sensor 13) and can be quickly and easily installed.

Finally it is obvious that modifications and variations may be made to the system described without departing from the protective scope of the invention.

For example, the signal proportional to acceleration of the vehicle may be obtained directly by means of an accelerometer 30 connected directly to an input of the control unit 10 (Figure 1).

The system 1 may be improved by means of an adjusting device 33 coupled to the control unit 10 and designed to be used to perform static adjustment of the inclination of the headlights 23r, 23l according to the load in the vehicle 5 and its distribution. By means of the adjusting device 33, therefore, it is possible to compensate for a variation in the pitching angle of the vehicle due for example to a load arranged in the rear part of the vehicle.

The static adjusting device 33 is therefore used in order to vary the position of the headlights 23r, 23l when the vehicle is at a standstill.

This static adjustment may be performed both manually and automatically.

In the case of manual static adjustment, the device 33 may be provided with a selector (not shown) provided with several positions corresponding to various loads inside the vehicle 5 (for example, a first position corresponding to a load composed of the driver alone; a second position corresponding to a load composed of the driver and a passenger sitting on the front seat; a third position corresponding to a load composed of the driver, a passenger sitting on the front seat and one passenger sitting on the rear seat; a fourth position corresponding to a load composed of the driver, a passenger sitting on the front seat and two passengers sitting on the rear seat; and a fifth position corresponding to the same load as the fourth position plus the weight of luggage).

The control unit 10, according to the signal generated by the device 33, formulates a command signal for the power circuit 15 which energizes the actuators 20r, 20l so as to modify the angle of incidence α of the optical axis 25 and keep the maximum distance of the illuminated area equal to L.

The control unit 10, in the case of acceleration or deceleration of the vehicle, commands the power circuit 15 with a signal S formulated according to acceleration of the vehicle and the signal generated by the device 33.

The signal of the device 33 is then used by the control unit 10 in order to "correct" the signal generated in response to acceleration of the vehicle so as to keep the maximum distance L of the illuminated area constant for any distribution and value of the static load present in the vehicle.

## Claims

1. Electronic system for automatically adjusting the inclination of the headlights of a vehicle, in particular a motor vehicle, comprising:
- an electronic command and control unit (10);
- linear actuator means (20r, 20l) coupled to the said headlights (23r, 23l) and designated to modify the inclination of the optical axis (25) of the said headlights, keeping the maximum distance (L) of the area in front of the vehicle illuminated by the said headlights (23r, 23l) substantially constant, in response to a command signal (S) generated by the said electronic unit (10), characterized in that the said electronic unit (10) formulates said command signal (S) on the basis of a signal proportional to the longitudinal acceleration of the said vehicle.

2. System according to Claim 1, characterized in that it comprises an accelerometer (30) generating the said signal proportional to the longitudinal acceleration of the said vehicle.

3. System according to Claim 1 or 2, characterized in that the said actuator means comprise linear stepper motors (20r, 20l).

4. System according to any one of the preceding claims, characterized in that it comprises static adjustment means (33) designed to generate a signal for static correction of the inclination of said headlights (23r, 23l) according to the load arranged inside the vehicle;
the said electronic unit (10) generating the said command signal (S) in response to the longitudinal acceleration (a) of the said vehicle and the said static correction signal.

## Patentansprüche

1. Elektronisches System für die automatische Herstellung der Neigung von Fahrzeugscheinwerfern, insbesondere eines Kraftfahrzeugs, umfassend:
- eine elektronische Befehls- und Steuereinheit (10);
- mit den Scheinwerfern (23r, 23l) gekoppelte lineare Betätigungsmittel (20r, 20l), bestimmt zum Modifizieren der Neigung der optischen Achse (25) der Scheinwerfer, um die Maximaldistanz (L) der vor dem Fahrzeug durch die Scheinwerfer (23r, 23l) ausgeleuchteten Fläche in Reaktion auf ein von der Elektronikeinheit (10) erzeugtes Befehlssignal (S) im wesentlichen konstant zu halten, dadurch gekennzeichnet, daß die Elektronikeinheit (10) das Befehlssignal (S) auf Basis eines der Längsbeschleunigung des Fahrzeugs proportionalen Signals erzeugt.

2. System nach Anspruch 1, dadurch gekennzeichnet, daß es ein das der Längsbeschleunigung des Fahrzeugs proportionale Signal erzeugendes Akzelerometer (30) umfaßt.

3. System nach Anspruch 1 oder 2, dadurch gekennzeichnet, daß die Betätigungsmittel lineare Schrittmotore (20r, 20l) umfassen.

4. System nach einem der vorangehenden Ansprüche, dadurch gekennzeichnet, daß es statische Einstellmittel (33) umfaßt, ausgelegt zum Erzeugen eines Signals für die statische Korrektur der Neigung der Scheinwerfer (23r, 23l) entsprechend der im Fahrzeug untergebrachten Last, wobei die Elektronikeinheit (10) das Befehlssignal (S) in Reaktion auf die Längsbeschleunigung (a) des Fahrzeugs und das statische Korrektursignal erzeugt.

## Revendications

1. Système électronique destiné à ajuster automatiquement l'inclinaison des phares d'un véhicule, en particulier un véhicule à moteur, comprenant :
- un bloc de commande et de contrôle électronique (10),
- des moyens d'actionnement linéaires (20r, 20l) couplés auxdits phares (23r, 23l) et conçus pour modifier l'inclinaison de l'axe optique (25) desdits phares, en maintenant la distance maximum (L) de la zone devant le véhicule illuminée par lesdits phares (23r, 23l), pratiquement constante, en réponse à un signal de commande (S) émis par ledit bloc électronique (10), caractérisé en ce que ledit bloc électronique (10) élabore ledit signal de commande (S) sur la base d'un signal proportionnel à l'accélération longitudinale dudit véhicule.

2. Système selon la revendication 1, caractérisé en ce qu'il comprend un accéléromètre (30) émettant ledit signal proportionnel à l'accélération longitudinale dudit véhicule.

3. Système selon la revendication 1 ou 2, caractérisé en ce que lesdits moyens d'actionnement comprennent des moteurs pas-à-pas linéaires (20r, 20l).

4. Système selon l'une quelconque des revendications précédentes, caractérisé en ce qu'il comprend un moyen d'ajustement statique (33) conçu pour émettre un signal destiné à une correction statique de l'inclinaison desdits phares (23r, 23l) conformément à la charge disposée à l'intérieur du véhicule,
ledit bloc électronique (10) émettant ledit signal de commande (S) en fonction de l'accélération longitudinale (a) dudit véhicule et dudit signal de correction statique.
